# EUROPÄISCHE PATENTSCHRIFT

(11) **EP 1 938 944 B1**
(45) Veröffentlichungstag und Bekanntmachung des Hinweises auf die Patenterteilung: **15.11.2017**
(21) Anmeldenummer: 07023924.9
(22) Anmeldetag: 11.12.2007
(51) Int. Cl.: B29C 45/16, B29C 45/37, B29C 45/14, B29C 45/56

(54) **Verfahren zur Herstellung eines mehrschichtigen Kunststoffkörpers**
Method for producing a multi-layered plastic body
Procédé pour la fabrication d'un corps en matière plastique multicouche

(30) Priorität: 27.12.2006 AT 89606 U
(43) Veröffentlichungstag der Anmeldung: 02.07.2008
(73) Patentinhaber: ENGEL AUSTRIA GmbH, 4311 Schwertberg (AT)
(72) Erfinder: Egger, Peter, 4311 Schwertberg (AT)
(74) Vertreter: Torggler & Hofinger Patentanwälte

(56) Entgegenhaltungen:
- EP-A- 1 491 317
- DE-A1-102004 035 759
- JP-A- 10 180 814
- JP-A- 2001 113 558

## Beschreibung

Die vorliegende Erfindung betrifft ein Verfahren zur Herstellung eines mehrschichtigen Kunststoffkörpers 40, wobei ein Einlegeteil 21 in einen Formhohlraum 8 eines Formwerkzeuges 5 einer Spritzgießmaschine 2 platziert wird und das Einlegeteil 21 anschließend durch Einspritzen von plastifiziertem Kunststoff in den Formhohlraum 8 bereichsweise von Kunststoff 31, 32, 33, 34, 35 umgeben wird, wobei das Formwerkzeug 5 als Tauchkantenwerkzeug ausgebildet ist und ein bewegliches Formteil 5a und ein feststehendes Formteil 5b aufweist.

Beim Stand der Technik ist es üblich, wenn mehrschichtige Kunststoffkörper mit einem Einlegeteil hergestellt werden sollen, dass der Einleger bzw. Vorspritzling durch Umsetzverfahren oder Drehtischverfahren aus dem Formhohlraum entnommen und in einen neuen Formhohlraum über ein Handhabungsgerät platziert wird. Dabei wird zuerst das Einlegeteil im Formhohlraum des Formwerkzeuges platziert, durch Kunststoff angespritzt, sodann wird das Werkzeug geöffnet und der erhärtete Spritzling in eine andere Form eingesetzt und erneut an- oder hinterspritzt. Alternativ dazu wird ein Teil des Werkzeuges gedreht und von einer anderen Seite angespritzt.

Die JP 2001-113558 zeigt ein Verfahren, bei dem ein Einlegeteil in die Form eingebracht wird. Anschließend wird mittels zweier Spritzaggregate, die in rechtem Winkel zueinander angeordnet sind und jeweils am feststehenden Formteil liegen, mehrmals eingespritzt, während die bewegliche Formhälfte nach hinten bewegt wird. Das Einlegeteil wird nur von der Vorderseite angespritzt.

Die DE 10 2004 035 759 A1 zeigt ein Verfahren zur Herstellung eines mehrschichtigen Formkörpers, wobei ebenfalls zuerst ein Einlegeteil in die Form eingesetzt wird. Anschließend wird das Einlegeteil von der einen Seite angespritzt. Schließlich werden Formkernteile der zweiten Form geöffnet und weiterer Kunststoff eingespritzt.

In der JP 10-180814 wird ein Einlegeteil 15 in eine Form eingebracht und angespritzt. Durch Auseinanderbewegen der Formwerkzeugteile kann in einem zweiten Schritt erneut Kunststoff eingespritzt werden.

Nachteilig am Stand der Technik ist der Umstand, dass für die Herstellung mehrschichtiger Kunststoffkörper mit Einlegeteil aufwendige Maschinenlösungen erforderlich sind. Vor allen Aufgabe der vorliegenden Erfindung ist es daher, ein Verfahren der eingangs genannten Gattung zu schaffen, das mit herkömmlichen Spitzwerkzeugen durchgeführt werden kann bzw. bei dem ein Einlegeteil trotz mehrere Verfahrensschritte optimal im Werkzeug platzierbar ist.
Diese Aufgabe wird mit den Merkmalen des Anspruchs 1 erzielt. Indem bei einem gattungsgemäßen Verfahren nach zumindest teilweise Erhärten des Kunststoffes der Formhohlraum vergrößert wird und zumindest ein weiteres Mal plastifizierter Kunststoff eingespritzt wird, haftet das Einlegeteil am zuerst eingespritzten Kunststoff und muss so nicht neu, beispielsweise durch ein Handhabungsgerät, in einem neuen Formhohlraum platziert werden.
Günstigerweise ist vorgesehen, dass der Formhohlraum erst dann vergrößert wird, wenn das Einlegeteil so fest mit dem zumindest teilweise erhärteten Kunststoff verbunden ist, dass es bei Vergrößerung des Formhohlraumes vom feststehenden Formteil gelöst wird. In der erfindungsgemäßen Ausführung ist vorgesehen, dass das Formwerkzeug ein bewegliches Formteil und ein feststehenden Formteil aufweist, wobei das Einlegeteil zumindest bereichsweise formschlüssig am feststehenden Formteil angebracht wird.
Zuerst wird also eine erste Schicht gespritzt. Nach einer Zwischenkühlzeit, in der wiederum dosiert wird, öffnet man die bewegliche Platte um einen gewissen Hubpunkt. Dabei wandert die erste gespritzte Schicht, auf der das Einlegeteil fixiert ist, mit der beweglichen Platte mit und die zweite Schicht kann eingespritzt werden. Nach dem Spritzvorgang sowohl der ersten als auch der zweiten Schicht ist ein Prägevorgang möglich. Aufgrund der Parallelitätsregelung kann die gewünschte Position exakt angefahren und gehalten werden. Um besonders dickwandige Bauteile mit erheblichen Wandstärken herstellen zu können, ist es denkbar, mehrere Einzelschichten geringer Dicke auf diese Art und Weise herzustellen, bis schlussendlich ein dickwandiger Körper aus mehreren identischen Schichten aufgebaut wird. Auf diese Art und Weise können beispielsweise Verstärkungselemente, elektronische Bauteile, wie Transponder wie z. B. ein RFID (Radio Frequency Identification) Transponder, mittig in den Körper eingebracht werden. Es lassen sich jedenfalls einfachere Werkzeuge verwenden und man kommt ohne Drehtische etc. aus. Außerdem lassen sich unterschiedliche Prozesse pro Verarbeitungsschritt kombinieren. Vor allem lassen sich durch mehrschichtige Prozesse dickere Wanddicken erziehlen, als durch einen einfachen Spritzgussprozess, wo beim Abkühlen des Spritzlings die Gefahr besteht, dass Teile des Kunststoffkörpers aufgrund von Materialschrumpfung Fehler aufweisen.

Weiters ist vorgesehen, dass das Einlegeteil derart in den Formhohlraum platziert wird, dass es durch den weiteren Einspritzvorgang vollständig von Kunststoff umgeben wird. Dadurch ist nicht nur eine feste Verbindung gegeben, es lässt sich außerdem eine Art Sandwich herstellen, bei dem allerdings nicht die Probleme auftreten, die herkömmlich bei Sandwich-Verfahren auftreten. Wie bereits angedeutet, kann vorgesehen sein, dass das Einlegeteil ein elektronisches Bauteil, vorzugsweise ein RFID, oder ein Verstärkungselement ist. Falls gewünscht ist, dass das Einlegeteil an der Oberfläche des mehrschichtigen Kunststoffkörpers zumindest teilweise angeordnet ist, ist es möglich, das Verfahren so zu gestalten, dass die Spritzgießmaschine zumindest zwei gegenüberliegende Spritzeinheiten aufweist, zwischen denen das Formwerkzeug angeordnet ist, wobei die gegenüberliegenden Spritzeinheiten abwechselnd in den Formhohlraum einspritzen. Dadurch kann der Körper von unterschiedlichen Seiten angespritzt werden.

Obwohl bei einem erfindungsgemäßen Verfahren stets derselbe Kunststoff verwendet werden kann, um einen dickeren Körper herstellen zu können, ist auch vorgesehen, dass verschiedene Kunststoffarten eingespritzt werden. Das heißt, dass gegenüber dem ersten eingespritzten Kunststoff zu einem späteren Zeitpunkt eine andere Kunststoffart eingespritzt wird.

Weiters kann vorgesehen sein, dass zumindest nach einem Einspritzvorgang ein Prägeschritt vorgesehen ist, damit so die Kunststoffmasse kompaktiert wird und eine ansehnlichere Oberfläche erzeigt wird.

In einer Ausführungsvariante ist vorgesehen, dass das bewegliche Formteil und/oder das feststehende Formteil bewegliche Abschnitte aufweist, sodass die Größe des Formhohlraumes bei geschlossenem Werkzeug und unbewegten Formplatten veränderbar ist. Es handelt sich dabei um die sogenannte "Core-back" Technologie, bei der nur ein Teil an einem Formteil des Werkzeuges bewegt wird, ohne, dass das Formteil sich mitbewegt.

Weiter Vorteile und Details der Erfindung zeigen die Figuren und erläutern die Figurenbeschreibungen. Es sind schematisch gezeigt in:
- Fig. 1a - 1d: Verfahrensschritte für eine erste Ausführungsvariante eines erfindungsgemäßen Verfahrens,
- Fig. 2: eine schematische Spritzgießmaschine zur Durchführung einer zweiten Ausführungsvariante eines erfindungsgemäßen Verfahrens sowie
- Fig. 3a - 3d: mehrere mehrschichtigen Kunststoffkörper hergestellt nach dem erfindungsgemäßen Verfahren.

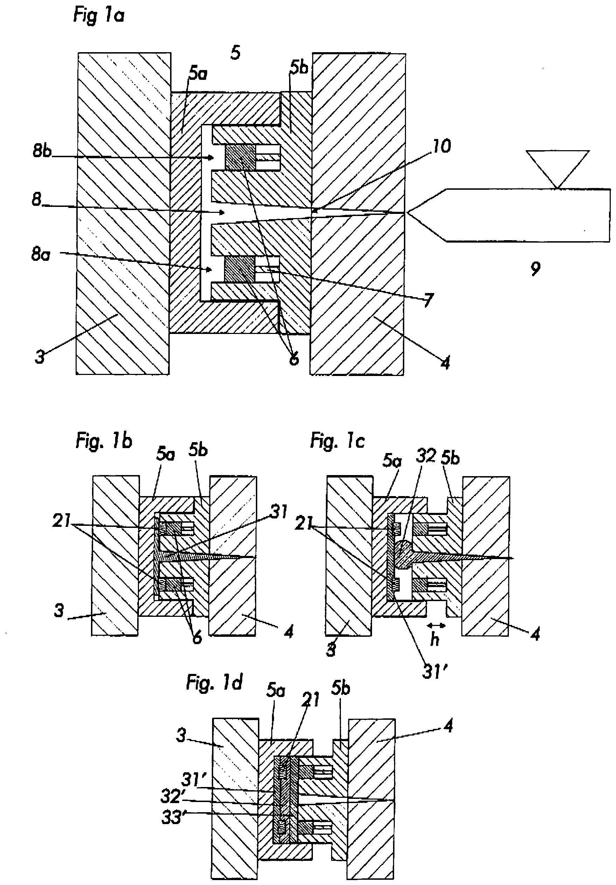

Die Fig. 1a bis Fig. 1d zeigen die einzelnen Verfahrensschritte zur Herstellung eines Mehrschichtigen Körpers 40. Dabei zeigt die Fig. 1a stark vereinfacht den Querschnitt einer Schließeinheit 1 einer Spritzgießmaschine 2 (nicht gezeigt) mit einer beweglichen Formaufspannplatte 3 und einer feststehenden Formaufspannplatte 4, auf der ein Formwerkzeug 5 aufgespannt ist. Das Formwerkzeug 5 weist zwei Formteile oder Formhälften 5a, 5b auf, wobei ein Formteil 5a des Formwerkzeuges 5 auf der beweglichen Formaufspannplatte 3 aufgespannt ist und ein Formteil 5b des Formwerkzeuges 5 auf der feststehenden Formaufspannplatte 4 aufgespannt ist. Im vorliegenden Fall handelt es sich bei dem Formwerkzeug 5 um ein so genanntes Tauchkantenwerkzeug.

Die Schließeinheit 1 der Fig. 1a zeigt ein Formteil 5b des Formwerkzeuges 5 mit relativ zum Formteil 5b beweglichen Einsätzen 6, die aber in ihrer Position fixierbar sind (hier über Zylinder 7), die innerhalb des Formwerkzeuges 5 angeordnet sind und die eine variable Gestaltung der Größe des Formhohlraumes 8 ermöglichen. Beispielsweise können die Einsätze 6 verschiebbar angeordnet sind, damit ein Einlegeteil 21 (Fig. 1b) besser im Formhohlraum 8 platzierbar ist. Im vorliegenden Fall können die Einsätze 6 entlang der Bewegungsrichtung der beweglichen Formaufspannplatte 3 bewegt werden. Die Einsätze 6 könnten aber auch auf dem beweglichen Formteil 5a angeordnet sein und/oder in eine Richtung abweichend der Bewegungsrichtung der beweglichen Formaufspannplatte 3 verschiebbar ausgebildet sein. Durch die Einsätze 6 können im Formhohlraum 8 Einlegebereiche 8a, 8b gebildet werden, in welche die Einlegeteile 21 bereichsweise etwa formschlüssig eingebracht werden können (siehe Fig. 1b). Über die Einspritzeinheit 9 kann nun plastifizierter Kunststoff über die Öffnung 10 in den Formhohlraum 8 des Formwerkzeuges 5 eingespritzt werden.

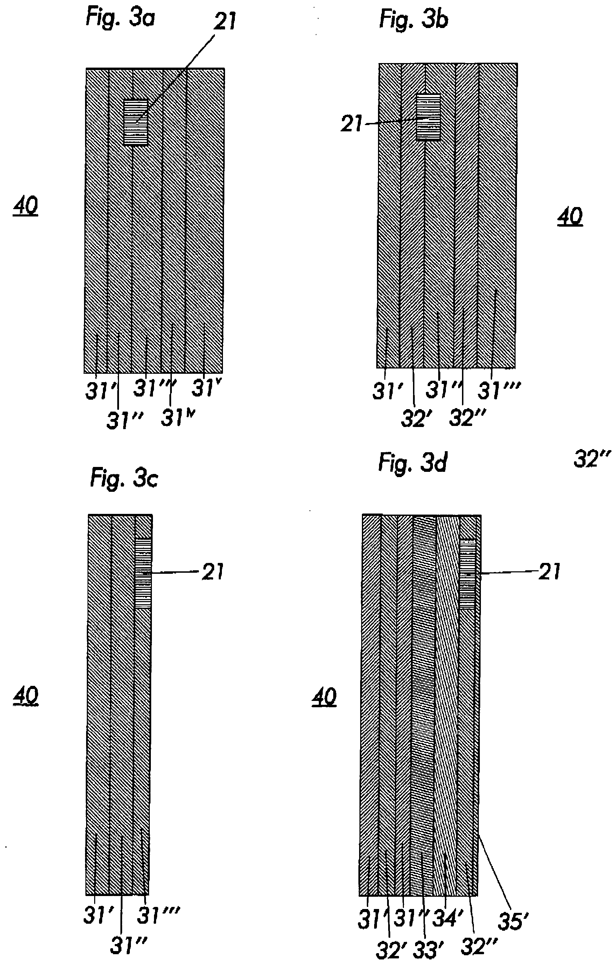

In der Fig. 1b ist der Übersichtlichkeit halber nur mehr die Schließeinheit 1 ohne die Einspritzeinheit 9 gezeigt. Das Formwerkzeug 5 ist geschlossen, wobei der Formhohlraum 8 frei bleibt. In die Einlegebereiche 8a, 8b ist jeweils ein Einlegeteil 21 eingebracht und durch die Öffnung 10 wird plastifizierter Kunststoff 31,32,33,34,35 von der Einspritzeinheit 7 in den Formhohlraum 8 des Formwerkzeuges 5 eingespritzt. Die Darstellung in Fig. 1b zeigt wie durch die Öffnung 5 ein erster plastifizierter Kunststoff 31, eingespritzt wird. Der Formhohlraum 10 wird nun vorzugsweise vollständig mit Kunststoff 31 ausgefüllt. Gegebenenfalls kann noch ein Prägeschritt erfolgen, d.h., auf den der Formhohlraum 8 wird Druck ausgeübt, Dies ist insbesondere dann günstig, wenn der Formhohlraum 8 tatsächlich vollständig mit Kunststoff 31 gefüllt werden soll, wenn beim Einspritzvorgang noch keine vollständige Füllung erzielt wurde, oder wenn der Kunststoff 31 durch Druckausübung bessere mechanische Eigenschaften entwickelt. Anschließend wird für eine kurze Zeit gewartet, sodass sich der Kunststoff 31 unter Bildung einer Schicht 31' zumindest teilweise erhärtet. Dabei hält oder haftet das mit dem Kunststoff 31 verbindbare Einlegeteil 21 am Kunststoff 31 bzw. der Schicht 31'.
In Fig. 1c ist nun gezeigt, dass das Formwerkzeug 5 durch Auseinanderbewegen der Formteile 51, 5b um einen geringen Hub h erweitert bzw. vergrößert wurde und weiterer Kunststoff 32 eingespritzt wird. Erkennbar ist, dass das Einlegeteil 21 an der ersten teilweise erhärteten Schicht 31' haftet. Beim Öffnen des Formwerkzeuges 5 wandert das an der beweglichen Formaufspannplatte 3 aufgespannte Formteil 5a des Formwerkzeuges 5 mit der Schicht 31' in Richtung der Bewegung der beweglichen Aufspannplatte 3 mit. Im vorliegenden Fall sind auch die Einsätze 6 verschoben worden, um die Einlegebereiche 8a, 8b für die Einlegeteile 21 zu verschließen. Der Einspritzvorgang kann bereits während des Öffnens des Formwerkzeuges 5 erfolgen. Dabei liegt die Auffahrgeschwindigkeit bevorzugt im Bereich zwischen 0,1 und 25 mm/s. Das Auffahren des Formwerkzeuges 5 kann sowohl aktiv durch Aktuation als auch passiv, d.h. durch den Schmelzdruck, erfolgen.
Weiters kann durch einen Prägevorgang der mehrschichtige Kunststoffkörper 40 in seine endgültige Form gepresst werden. In Fig. 1d ist schlussendliche ein dreischichtiger Kunststoffkörper 40 im Formwerkzeug 5 (mit der Schichtfolge 31', 32', 33' bestehend aus drei verschiedenen Kunststoffen 31, 32, 33) gezeigt. Im vorliegenden Beispiel wurden zwei Einlegeteile 21 innerhalb eines dreischichtigen Kunststoffkörper 40 platziert. Die Erfindung sieht allerdings auch vor, einen Körper 40 mit zahlreichen, d.h. deutlich über 5 Schichten zu erzeugen (siehe Fig. 3). Zur Erzeugung mehrschichtiger oder mehrfarbiger Kunststoffkörper 40 können die an sich bekannten Anordnungen von Spritzeinheiten 9, 9' vorgesehen sein. Beispielsweise seien hier Anordnungen mit mehreren Spritzeinheiten 9, 9' in L-Form (zweite Spritzeinheit etwa horizontal unter 90° zur Standardspritzeinheit), V-Form (zweite Spritzeinheit vertikal über der Schließeinheit auf einer Verschiebeeinheit) oder W-Form (zweite Spritzeinheit in der so genannten Huckepack-Anordnung oberhalb der Standard-Einspritzeinheit positioniert) genannt.

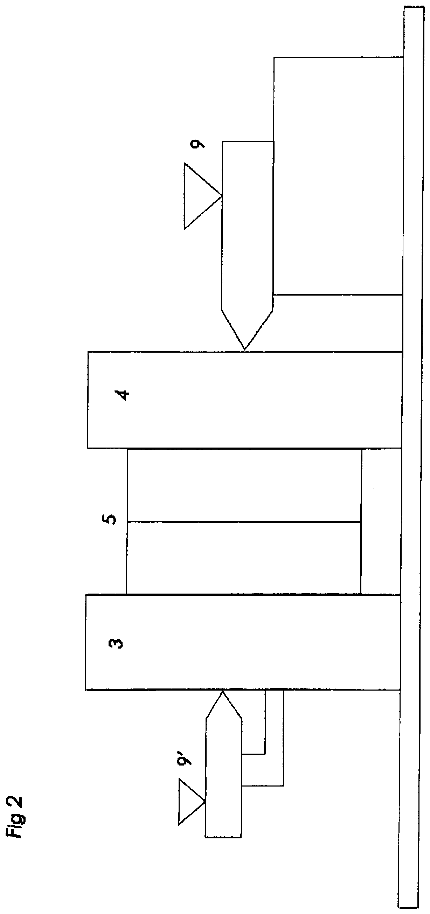

Die Fig. 2 zeigt eine Spritzgießmaschine mit einer Schließeinheit, die dieselben Bauteile wie die zuvor gezeigte Schließeinheit aufweist, wobei zusätzlich auch an der beweglichen Formaufspannplatte eine Einspritzeinheit vorgesehen, sodass von zwei Seiten in das Formwerkzeug eingespritzt werden kann.

Fig. 3a bis 3d zeigten Querschnitte durch mehrere Ausführungsbeispiele erfindungsgemäß erzeugter mehrschichtiger Kunststoffe 40. Fig. 3a zeigt einen fünfschichtigen Körper 40 mit fünf Schichten 31', 31", 31"', 31^{iv}, 31^{v}, die jeweils aus demselben Kunststoff 31 hergestellt wurden. Fig. 3b zeigt einen fünfschichtigen Körper 40 hergestellt aus zwei verschiedenen Kunststoffen 31, 32 durch abwechselndes Einspritzen (z.B. unter Verwendung einer Vorrichtung gemäß Fig. 2). Das Einlegeteil 21 ist innerhalb der fünf Schichten 31', 32', 31", 32", 31"' platziert. Fig. 3c zeigt einen dreischichtigen Kunststoffkörper 40 mit oberflächlich teilweise freiliegendem Einlegeteil 21, aufgebaut aus drei Schichten 31', 31", 31'" gleichen Kunststoffes 31. Fig. 3d zeigt einen siebenschichtigen Kunststoffkörper mit Schichtfolge 31', 32', 31", 33', 34', 32", 35', also aus 5 verschiedenen Kunststoffen variabler Abfolge. Schicht 35' ist eine transparente, Deckschicht zum Schutz des Einlegers 21.

Auf diese Art und Weise können zum Beispiel Verstärkungselemente und RFIDs mittig in den Kunststoffkörper 40 eingebracht werden. Bei Verstärkungselementen wird so ein Sandwicheffekt vermieden. RFIDs können nicht ohne weiteres entfernt werden. Weitere Vorteile:
- einfachere Werkzeuge
- Einlegeteil benötigt keinen Drehtisch etc.
- Kühlzeitreduktion bei dicken Bauteilen
- Verbesserung der Oberflächenqualität (verrippte Strukturen mit Einfallstellen werden durch 2. Schicht überdeckt)
- Kombination von unterschiedlichen Prozessen pro Verarbeitungsschritt möglich
- Einsparung einer Wendeplattenmaschine bei kleineren Stückzahlen
- Verarbeitung auf Standard-Maschine
- Auffahren parallelitätsgeregelt
- Einspritzen startet bereits während Auffahren
- Bauteile mit verrippter Unterstruktur und glatter Außenseite herstellbar
- Bauteile mit fasergefüllter Unterstruktur und glatter Außenseite herstellbar
- Außerdem ist eine Kombination mit Fluidinjektion im 2. Schritt möglich.

## Patentansprüche

1. Verfahren zur Herstellung eines mehrschichtigen Kunststoffkörpers (40), wobei ein Einlegeteil (21) in einen Formhohlraum (8) eines Formwerkzeuges (5) einer Spritzgießmaschine (2) platziert wird und das Einlegeteil (21) anschließend durch Einspritzen von plastifiziertem Kunststoff in den Formhohlraum (8) bereichsweise von Kunststoff (31, 32, 33, 34, 35) umgeben wird, wobei das Formwerkzeug (5) als Tauchkantenwerkzeug ausgebildet ist und ein bewegliches Formteil (5a) und ein feststehendes Formteil (5b) aufweist, wobei nach zumindest teilweisem Erhärten des Kunststoffes (31, 32, 33, 34, 35) der Formhohlraum (8) vergrößert wird und zumindest ein weiteres Mal plastifizierter Kunststoff (31, 32, 33, 34, 35) eingespritzt wird, wobei das Einlegeteil (21) zumindest bereichsweise formschlüssig an einem feststehenden Formteil (5b) angebracht wird, der Formhohlraum durch Auseinanderbewegen der Formteile (5a, 5b) vergrößert wird, der Formhohlraum (8) erst dann vergrößert wird, wenn das Einlegeteil (21) nach wenigstens teilweisem Erhärten des Kunststoffes (31, 32, 33, 34, 35) so fest mit dem zumindest teilweise erhärtetem Kunststoff (31', 32', 33', 34', 35') durch Haften verbunden ist, dass es bei Vergrößerung des Formhohlraumes (8) vom feststehenden Formteil (5b) gelöst wird, und das Einlegeteil (21) gemeinsam mit dem zumindest teilweise erhärteten Kunststoff (31', 32', 33', 34', 35') mit dem beweglichen Formteil (5a) wandert und das Einlegeteil (21) derart in den Formhohlraum (8) platziert wird, dass es infolge des wenigstens einen weiteren Einspritzvorganges vollständig von Kunststoff (31, 32, 33, 34, 35) umgeben wird.

2. Verfahren nach Anspruch 1, **dadurch gekennzeichnet, dass** das Einlegeteil (21) ein Transponder ist.

3. Verfahren nach Anspruch 1 oder 2, **dadurch gekennzeichnet, dass** das Einlegeteil ein elektronisches Bauteil, vorzugsweise ein RFID, oder ein Verstärkungselement ist.

4. Verfahren nach einem der Ansprüche 1 bis 3, **dadurch gekennzeichnet, dass** die Spritzgießmaschine (2) wenigstens zwei Spritzeinheiten (9, 9') aufweist.

5. Verfahren nach einem der Ansprüche 1 bis 4, **dadurch gekennzeichnet, dass** die Spritzgießmaschine (2) zumindest zwei gegenüber angeordnete Spritzeinheiten (9, 9') aufweist, zwischen denen das Formwerkzeug (5) angeordnet ist, wobei die gegenüber angeordnete Spritzeinheiten (9, 9') abwechselnd in den Formhohlraum (8) einspritzen.

6. Verfahren nach einem der Ansprüche 1 bis 5, **dadurch gekennzeichnet, dass** verschiedene Kunststoffarten (31, 32, 33, 34, 35) eingespritzt werden.

7. Verfahren nach einem der Ansprüche 1 bis 6, **dadurch gekennzeichnet, dass** zumindest nach einem Einspritzvorgang oder während eines Einspritzvorganges ein Prägeschritt vorgesehen ist.

8. Verfahren nach einem der Ansprüche 1 bis 7, **dadurch gekennzeichnet, dass** das bewegliche Formteil (5a) und/oder das feststehende Formteil (5b) bewegliche Abschnitte (6) aufweist, sodass die Größe des Formhohlraumes (8) bei geschlossenem Werkzeug (5) und unbewegten Formplatten (3, 4) veränderbar ist.

## Claims

1. A process for producing a multi-layer plastic body (40), wherein an insert portion (21) is placed in a mould cavity (8) of a moulding tool (5) of an injection moulding machine (2) and the insert portion (21) is then surrounded region-wise by plastic (31, 32, 33, 34, 35) by the injection of plasticised plastic into the mould cavity (8), wherein the moulding tool (5) is in the form of a shear edge tool and has a moveable mould portion (5a) and a stationary mould portion (5b), wherein after at least partial hardening of the plastic (31, 32, 33, 34, 35) the mould cavity (8) is increased in size and plasticised plastic (31, 32, 33, 34, 35) is injected at least one further time, wherein the insert portion (21) is at least region-wise disposed in positively locking relationship on a stationary mould portion (5b), the mould cavity is increased in size by moving the mould portions (5a, 5b) away from each other, the mould cavity (8) is increased in size only when the insert portion (2) after at least partial hardening of the plastic (31, 32, 33, 34, 35) is fixedly connected by adhesion to the at least partially hardened plastic (31', 32', 33', 34', 35') in such a way that upon the increase in size of the mould cavity (8) the insert portion is released from the stationary mould portion (5b) and the insert portion (21) together with the at least partially hardened plastic (31', 32', 33', 34', 35') moves with the moveable mould portion (5a) and the insert portion (21) is placed in the mould cavity (8) in such a way that it is completely surrounded by plastic (31, 32, 33, 34, 35) as a consequence of the at least one further injection operation.

2. A process according to claim 1 **characterised in that** the insert portion (21) is a transponder.

3. A process according to claim 1 or claim 2 **characterised in that** the insert portion is an electronic component, preferably an RFID, or a reinforcement element.

4. A process according to one of claims 1 to 3 **characterised in that** the injection moulding machine (2) has at least two injection units (9, 9').

5. A process according to one of claims 1 to 4 **characterised in that** the injection moulding machine (2) has at least two oppositely arranged injection units (9, 9') between which the moulding tool (5) is arranged, wherein the oppositely arranged injection units (9, 9') inject alternately into the mould cavity (8).

6. A process according to one of claims 1 to 5 **characterised in that** different kinds of plastic (31, 32, 33, 34, 35) are injected.

7. A process according to one of claims 1 to 6 **characterised in that** an injection embossing step is provided at least after an injection operation or during an injection operation.

8. A process according to one of claims 1 to 7 **characterised in that** the moveable mould portion (5a) and/or the stationary mould portion (5b) has moveable parts (6), so that the size of the mould cavity (8) is variable with the tool (5) closed and the mould plates (3, 4) unmoved.

## Revendications

1. Procédé de fabrication d'un corps en matière synthétique à plusieurs couches (40), dans lequel une pièce d'insertion (21) est placée dans une cavité de moule (8) d'un outil de moulage (5) d'une machine de moulage par injection (2) et la pièce d'insertion (21) est entourée ensuite par endroits de matière synthétique (31, 32, 33, 34, 35) par injection de matière synthétique plastifiée dans la cavité de moule (8), dans lequel l'outil de moulage (5) est conçu comme un outil à bords plongeants et présente une pièce moulée mobile (5a) et une pièce moulée fixe (5b), dans lequel après durcissement au moins partiel de la matière synthétique (31, 32, 33, 34, 35) la cavité de moule (8) est agrandie et au moins une matière synthétique plastifiée une nouvelle fois (31, 32, 33, 34, 35) est injectée, dans lequel la pièce d'insertion (21) est engagée au moins par endroits avec complémentarité de formes sur une pièce moulée fixe (5b), la cavité de moule est agrandie par écartement des pièces moulées (5a, 5b), la cavité de moule (8) n'est ensuite agrandie que lorsque la pièce d'insertion (21), après durcissement au moins partiel de la matière synthétique (31, 32, 33, 34, 35), est reliée par adhérence si solidement à la matière synthétique au moins partiellement durcie (31', 32', 33', 34', 35'), qu'elle est déliée de la pièce moulée fixe (5b) lors de l'agrandissement de la cavité de moulage (8), et la pièce d'insertion (21) se déplace avec la pièce moulée mobile (5a) conjointement avec la matière synthétique au moins partiellement durcie (31', 32', 33', 34', 35') et la pièce d'insertion (21) est placée de manière telle dans la cavité de moule (8) qu'elle est entourée intégralement de matière synthétique (31, 32, 33, 34, 35) suite à au moins un autre processus d'injection.

2. Procédé selon la revendication 1, **caractérisé en ce que** la pièce d'insertion (21) est un transpondeur.

3. Procédé selon la revendication 1 ou 2, **caractérisé en ce que** la pièce d'insertion est un composant électronique, de préférence un RFID, ou un élément de renforcement.

4. Procédé selon l'une des revendications 1 à 3, **caractérisé en ce que** la machine de moulage par injection (2) présente au moins deux unités d'injection (9, 9').

5. Procédé selon l'une des revendications 1 à 4, **caractérisé en ce que** la machine de moulage par injection (2) présente au moins deux unités d'injection disposées face à face (9, 9'), entre lesquelles est disposé l'outil de moulage (5), dans lequel les unités d'injection disposées face à face (9, 9') injectent alternativement dans la cavité de moulage (8).

6. Procédé selon l'une des revendications 1 à 5, **caractérisé en ce que** divers types de matière synthétique (31, 32, 33, 34, 35) sont injectés.

7. Procédé selon l'une des revendications 1 à 6, **caractérisé en ce qu'**une étape d'estampage est prévue au moins après un processus d'injection ou pendant un processus d'injection.

8. Procédé selon l'une des revendications 1 à 7, **caractérisé en ce que** la pièce moulée mobile (5a) et / ou la pièce moulée fixe (5b) présente des sections mobiles (6), de sorte que la grandeur de la cavité de moule (8) peut être modifiée lorsque l'outil (5) est fermé et que les plaques moulées (3, 4) sont immobiles.
